(19)

Europäisches
Patentamt
European
Patent Office
Office européen
des brevets

(11) **EP 2 175 131 A2**

(12) **EUROPEAN PATENT APPLICATION**

(43) Date of publication:
**14.04.2010 Bulletin 2010/15**

(51) Int Cl.:
*F03D 7/02* (2006.01)

(21) Application number: **09172041.7**

(22) Date of filing: **02.10.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br><br>(30) Priority: **10.10.2008 US 248977**<br><br>(71) Applicant: **General Electric Company**<br>**Schenectady, NY 12345 (US)** | (72) Inventors:<br>• **Nies, Jacob Johannes**<br>**8042 HA, Zwolle (NL)**<br>• **Hoffmann, Till**<br>**49078, Osnabrück (DE)**<br><br>(74) Representative: **Bedford, Grant Richard**<br>**GE International Inc.**<br>**Global Patent Operation - Europe**<br>**15 John Adam street**<br>**London WC2N 6LU (GB)** |

(54) **Apparatus and method for continuous pitching of wind turbine blades**

(57)    A wind turbine (100) includes a machine nacelle (103) and a rotor having at least one rotor blade (101) and a hub (104). An anemometer unit (111) is adapted for measuring a first wind velocity (105) at a first rotational position of the rotor and for measuring at least one second wind velocity (105) at at least one second rotational position of the rotor. At least one pitch angle adjustment unit (114) is provided for adjusting a first pitch angle and at least one second pitch angle of the at least one rotor blade (101) as a function of the rotational position of the rotor, wherein the at least one pitch angle adjustment unit (114) is adapted for changing the pitch angle between the first pitch angle and the at least one second pitch angle while the rotor of the wind turbine (100) is rotating. A method for continuous pitching of wind turbine blades is also disclosed.

FIG. 5

EP 2 175 131 A2

## Description

The present disclosure generally relates to wind turbines including a rotor having a plurality of rotor blades and a hub, and in particular relates to an apparatus and a method for continuous pitching of the rotor blades of a wind turbine.

Wind turbines are used to convert wind energy into electrical output energy, wherein a wind turbine including a tower, a machine nacelle and a rotor having a plurality of rotor blades and a hub can be adjusted with respect to the incoming wind direction. Typically the machine nacelle arranged atop the tower is rotatable about a vertical axis, e.g. the tower axis.

Rotor blades of a rotor are typically adjusted with respect to the incoming wind strength and/or direction. The angle which is adjusted, i.e. a rotation about a rotor blade axis, is called a pitch angle, and the method for changing the pitch angle is called pitching.

During operation, the rotor including the rotor blades rotates about a typically horizontal axis, e.g. the main shaft axis.

Typically, the pitch angle of the plurality of rotor blades is adjusted with respect to the incoming wind speed. Due to the length of the individual rotor blades, the rotor blades traverse a large circle extending from lower regions near ground to higher regions high above a machine nacelle of the wind turbine.

The rotating rotor blades span a circular area which is oriented vertically and perpendicular to the main shaft axis. Under typical operating conditions, the wind velocity and/or the wind direction vary as a function of height above ground. The variation in wind velocity as a function of height is called wind shear.

In view of the above, a wind turbine is provided including a machine nacelle and a rotor having at least one rotor blade and a hub, said wind turbine further including an anemometer unit adapted for measuring a first wind velocity at a first rotational position of the rotor and for measuring at least one second wind velocity at at least one second rotational position of the rotor, and at least one pitch angle adjustment unit adapted for adjusting a first pitch angle of the at least one rotor blade as a function of the rotational position of the rotor wherein the first pitch angle corresponds to the first wind velocity and for adjusting at least one second pitch angle of the at least one rotor blade as a function of the rotational position of the rotor wherein the at least one second pitch angle corresponds to the at least one second wind velocity, wherein the at least one pitch angle adjustment unit is adapted for changing the pitch angle between the first pitch angle and the at least one second pitch angle while the rotor of the wind turbine is rotating.

According to another aspect a method for adjusting a pitch angle of at least one rotor blade of a wind turbine including a machine nacelle and a rotor having at least one rotor blade and a hub is provided, said method further including the steps of measuring a first wind velocity at a first rotational position of the rotor, measuring at least one second wind velocity at at least one second rotational position of the rotor, adjusting a first pitch angle of the at least one rotor blade as a function of the rotational position of the rotor wherein the first pitch angle corresponds to the first wind velocity, adjusting at least one second pitch angle of the at least one rotor blade as a function of the rotational position of the rotor wherein the at least one second pitch angle corresponds to the at least one second wind velocity, and changing the pitch angle between the first pitch angle and the at least one second pitch angle while the rotor of the wind turbine is rotating.

According to yet another aspect a method for adjusting a pitch angle of at least one rotor blade of a wind turbine including a machine nacelle and a rotor having at least one rotor blade and a hub is provided, said method further including the steps of measuring a bending moment of the rotor of the wind turbine, determining a wind shear distribution at the location of the wind turbine from the measured bending moment, adjusting a first pitch angle of the at least one rotor blade wherein the first pitch angle corresponds to a first wind velocity of the wind shear distribution, adjusting at least one second pitch angle of the at least one rotor blade wherein the at least one second pitch angle corresponds to a second wind velocity of the wind shear distribution, and changing the pitch angle between the first pitch angle and the at least one second pitch angle while the rotor of the wind turbine is rotating.

Further exemplary embodiments are according to the dependent claims, the description and the accompanying drawings.

A full and enabling disclosure of the present invention, including the preferred mode thereof, to one of ordinary skill in the art is set forth more particularly in the remainder of the specification including reference to the accompanying drawings, wherein:

Fig. 1 shows a wind turbine including a tower, a machine nacelle and a rotor having a plurality of rotor blades and a hub;

Fig. 2 is a block diagram illustrating components for controlling a pitch angle of at least one rotor blade as a function of a rotational position of the rotor according to a typical embodiment;

Fig. 3 illustrates a wind turbine in environmental conditions where wind shear is present;

Fig. 4 is a diagram showing a pitch offset as a function of a rotational position of the rotor for three individual rotor blades;

Fig. 5 is a flowchart for illustrating a method for adjusting a pitch angle of at least one rotor blade of a wind turbine when wind shear is present, according to a typical embodiment; and

Fig. 6 is a block diagram of another method for continuous pitching in dependence of a wind shear present at the location of the wind turbine, according to another typical embodiment.

Reference will now be made in detail to the various exemplary embodiments, one or more examples of which are illustrated in the drawings. Each example is provided by way of explanation and is not meant as a limitation. For example, features illustrated or described as part of one embodiment can be used on or in conjunction with other embodiments to yield yet a further embodiment. It is intended that the present disclosure includes such modifications and variations.

A number of embodiments will be explained below. In this case, identical structural features are identified by identical reference symbols in the drawings. The structures shown in the drawings are not depicted true to scale but rather serve only for the better understanding of the embodiments.

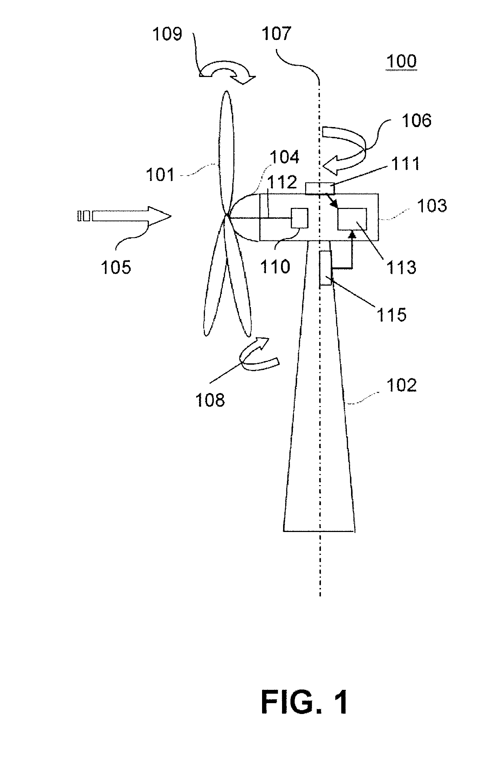

Fig. 1 shows a wind turbine 100 including a tower 102, a machine nacelle 103 and a rotor having a plurality of rotor blades 101 and a hub 104. The nacelle 103 can be rotated about a vertical axis 107 in accordance with the incoming wind direction 105. The rotor having the plurality of rotor blades 101 rotates about a main shaft axis 112. A rotational position detector 110 is connected to the main shaft axis 112 such that a rotational position of the rotor, e.g. the rotational position of an individual rotor blade or the circumferential position can be determined.

Furthermore, the machine nacelle 103 includes an anemometer unit 111 which is used to measure the strength (velocity vector) of the incoming wind 105. An output signal of the anemometer unit 112 is supplied to a wind shear determination unit 113. In addition to the anemometer unit 111, the wind turbine 100 includes a bending moment detector 115 which is used to determine a bending moment of the wind turbine about an axis which is perpendicular to the vertical axis 107 and the main shaft axis 112. The bending moment detector is adapted for detecting a bending moment of at least one of a rotor blade, a blade extender, the hub, a main bearing, the main shaft, the machine nacelle, a yaw bearing, and the tower.

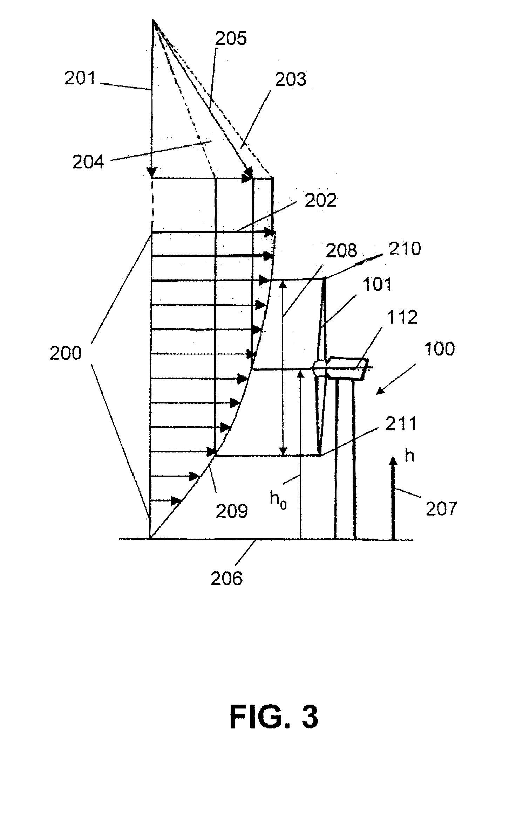

This bending moment is an indicator for wind shear (see description herein below with reference to Fig. 3). The bending moment detector 115 determines a bending moment 109 which results from a wind load due to the incoming wind 105 with respect to the rotor blades 101. The rotor blades 101 may be adjusted with respect to a specific pitch angle 108 such that an energy conversion efficiency of mechanical (wind) energy into rotational energy of the main shaft axis 112 can be adjusted.

It is apparent that an optimum pitch angle can only be adjusted for a specific height and for a specific wind velocity. When the wind velocity changes and the pitch angle can be changed during one rotation of at least one rotor blade, the pitch angle might be adjusted continuously or step-wise to values where the energy conversion efficiency of the wind turbine is high.

It is noted here that the wind speed may be measured in a direct or in an indirect way. One way to measure the wind speed is by using angle of attack sensors. Another way to measure the wind speed is to measure the wind speed over one or more circles in the rotor plane, each circle in the rotor being covered by one sensor.

The bending moment detector 115 provides an output signal for the wind shear determination unit 113. The wind shear determination unit 113 is capable of determining a vertical wind shear independence of the anemometer signal supplied by the anemometer unit 111 and the bending moment signal supplied by the bending moment detector 115.

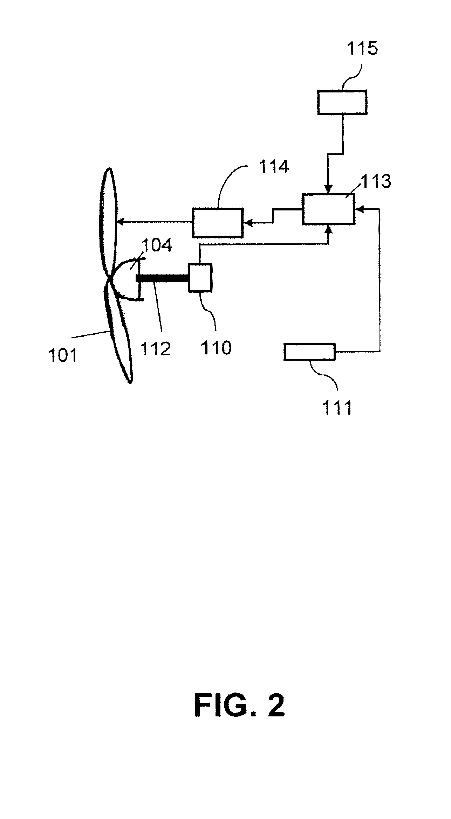

A yaw angle 106 may be adjusted for changing incoming wind directions 105 such that the machine nacelle 103 may be rotated about the vertical axis 107 in dependence of the incoming wind direction 105. The pitch angle 108 may be adjusted by using a pitch angle adjustment unit 114 which will be described with respect to Fig. 2 herein below.

Fig. 2 is a block diagram of typical components used for adjusting the pitch angle 108 (Fig. 1) of rotor blades 101 of a wind turbine 100 as a function of the wind velocity and the wind shear present at the location of the wind turbine 100. A rotational position of the rotor having a plurality of rotor blades 101 and the hub 104 is determined by means of the rotational position detector 110.

For example, the rotational position detector 110 provides an output signal which is an indicator of the rotational position of the rotor and therefore of a specific rotational position of each individual rotor blade. This output signal is delivered to the wind shear determination unit 113. Furthermore, the wind shear determination unit 113 receives a signal being an indicator for the wind velocity from the anemometer unit 111.

It is noted here that even though the main wind shear direction is vertical, a horizontal wind shear may be present and may be detected by the system. Thus singly vertical wind shear, singly horizontal wind shear, and a combination of both may be detected. Furthermore it is noted here that a pitching schedule may be different for vertical and horizontal wind shear as the velocity fields in both directions are typically different.

Furthermore, the wind shear determination unit 113 receives a signal being an indicator for the bending moment from the bending moment detector 114. From these signals, the wind shear at the location of the wind turbine may be calculated. According to a typical embodiment, each individual rotor blade 101 may be controlled by means of a pitch angle adjustment unit 114 which is schematically shown in Fig. 2.

It is noted here that the pitch angle adjustment unit 114 is included into the hub 104 although this is not shown in the schematic drawing of Fig. 2. The pitch angle adjustment unit 114 is capable of adjusting the pitch angle of an individual rotor blade 101 as a function of the rotational position determined by the rotational position detector 110 and the wind shear determined by both the anemometer unit 111 and the bending moment detector 115.

It is noted here that the pitch angle 108 (Fig. 1) of an individual rotor blade may be adjusted as a function of the output signal of the bending moment detector 115 and the output signal of the rotational position detector 110, according to another preferred embodiment.

Fig. 3 illustrates environmental conditions in the vicinity of a wind turbine 100. It is noted here that, albeit horizontal wind shear can occur in some situations, the typical embodiment is related to vertical wind shear which in most cases occurs. As shown in Fig. 3, the wind velocity (length of the arrow) is directed from left to right ($v_{wind}$) 202, i.e. a horizontal wind velocity is a function of height above a ground level 206.

Reference numeral 207 indicates a height h above ground level. The diameter which is encompassed by the rotor is indicated by reference numeral 208. As can be seen from Fig. 3, the length of the wind velocity vector, i.e. the horizontal wind velocity in the direction of the main shaft axis 112 of the wind turbine, changes as a function of height above ground level 207. Thus at different heights above ground the wind velocity may be different such that an appropriate pitch angle 108 may be different for different heights above ground for an efficient energy conversion of wind energy into rotational energy.

In the situation shown in Fig. 3, the pitch angle 108 is adjusted to be larger when the rotor blade 101 passes a location high above ground as in the case when the rotor blade is near ground level 206. For the adjustment of the pitch angle 108, a wind velocity vector parallel to the main shaft axis 112 at the height h above ground level 207 of the main shaft axis 112 is taken into account.

A specific pitch angle is adjusted for the height $h_0$ as a reference pitch angle 108. With respect to this reference pitch angle 108, a pitch offset is adjusted in dependence of the rotational position of the rotor and the wind shear present at location of the wind turbine 100. A line which is drawn vertically from the cross-section of the main shaft axis 112 with an envelope 209 of the wind shear results in a vector sum velocity 205 wherein the specific reference pitch angle 108 is adjusted.

As a function of a tip velocity 201 ($v_{tip}$), different offsets with respect to the vector sum velocity 205 can be adjusted. A region of decreased pitching 204 is adjusted for wind velocities occurring in the lower half circle of the area in which the rotor blades rotate. A region of increased pitching 203 is the region which is passed by the individual rotor blades between the height of the main shaft axis 112 and the upper tip 210.

The lower tip 211 corresponds to a lower wind velocity such that the pitch angle may be adjusted with respect to the rotational position. The pitch angle adjustment unit 114 (see Fig. 2) is adapted for adjusting a first pitch angle 108 of at least one rotor blade 101 wherein the first pitch angle 108 corresponds to a first wind velocity of the wind shear distribution 209 and for adjusting at least one second pitch angle 108 of the at least one rotor blade 101, wherein the at least one second pitch angle corresponds to a second horizontal wind velocity 202 of the wind shear distribution 209.

Furthermore, the at least one pitch angle adjustment unit 114 is adapted for changing the pitch angle between the first pitch angle and the second pitch angle while the rotor of the wind turbine 100 is rotating.

According to a typical embodiment, the at least one pitch angle adjustment unit 114 is adapted for adjusting the first pitch angle to a minimum pitch angle corresponding to a minimum horizontal wind velocity 202 of the wind shear distribution (wind shear envelope) 209. Furthermore, the at least one pitch angle adjustment unit 114 is adapted for adjusting the at least one second pitch angle to a maximum pitch angle 108 corresponding to a maximum horizontal wind velocity 202 of the wind shear distribution 209.

The pitch angle adjustment unit may be used for adjusting the pitch angle 108 of at least one rotor blade 101 continuously or step-wise between the first pitch angle and the second pitch angle during one half rotation of the rotor. In a typical embodiment, the minimum pitch angle is adjusted when the rotor blade 101 has an orientation with its tip oriented at the position indicated by reference numeral 211, wherein the maximum pitch angle is adjusted when the at least one rotor blade 101 is oriented with its tip at a location indicated by reference numeral 210 in Fig. 3.

The envelope of the wind shear, i.e. the wind shear distribution 209, may be evaluated from the bending moment detected by the bending moment detector 115 (Fig. 2). At a vector sum velocity 205, which is the vector sum of the tip velocity 201 and the actual horizontal wind velocity 202, the pitch offset of zero is adjusted. The wind shear determination unit 113 is adapted for determining a vertical wind shear distribution v(h) at the location of the wind turbine according to the relation:

$$v(h) = v_{ref} \cdot \left( \frac{h}{h_{ref}} \right)^{\alpha},$$

wherein h is a height above ground, $v_{ref}$ is a reference velocity at a reference height $h_{ref}$, and $\alpha$ is a predeterminable parameter. It is noted here that the above equation is only an exemplary relation for determining wind shear distribution, and different relations may apply. The parameter $\alpha$ is site-dependent and typically ranges between 0.10 and 0.20. More typically, the parameter $\alpha$ is

0.16.

When the rotor including the rotor blades 101 of the wind turbine 100 is rotating, a cyclic pitching during one rotation is performed between the minimum pitch angle (tip position 211) to the maximum pitch angle (tip position 210).

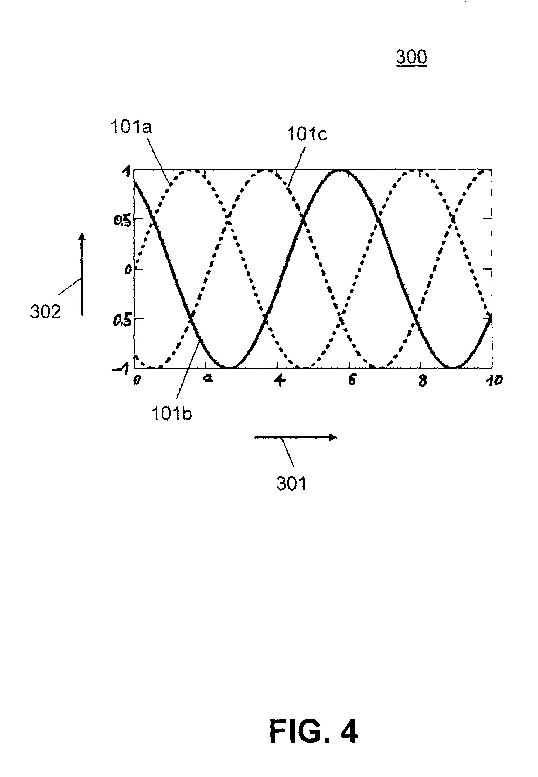

Fig. 4 illustrates a cyclic pitching of three individual rotor blades 101a, 101b and 101c in more detail. The diagram illustrated in Fig. 4 shows a pitch offset 302 as a function of a rotational position 301 of each individual rotor blade. For a rotor blade 101a, a pitch offset of zero is adjusted when this specific rotor blade 101a is in a horizontal position (rotational position 301 = 0).

It is noted here that the rotational position 301 is given in radiant measure, wherein the pitch offset 302 is given in relative units between 0 and 1 and between 0 and -1, respectively. As an example, the pitch offset may be multiplied by a value of 15 degrees in order to obtain a desired pitch angle. It is noted here that the units are only exemplary, and that several other units may apply. It is assumed that the rotor blade 101a at first reaches the upper tip position 210 such that maximum pitching occurs and then continuously or step-wise is changed between minimum pitching and maximum pitching. It is noted that, with reference to Fig. 4, the continuous pitching of three individual rotor blades is explained. It is nevertheless possible to have a larger or lower number of rotor blades, a non-sinusoidal movement, and a minimum pitch angle and maximum pitch angle that are not occurring in upper tip or lower tip positions 210 and 211 depicted in Fig. 3.

At a rotational position 301 of $2\pi$ (6.28), the rotor blade 101a has completed one full rotation. The pitching of the remaining two rotor blades is performed in accordance with the first rotor blade 101a with the difference that a phase difference is introduced. Thus, the second rotor blade 101b has a phase change of 120 degrees ($2\pi/3$) in radiant measure) with respect to the first rotor blade 101a with respect to its pitching angle. In the same way, the third rotor blade 101c has a phase difference of 120 degrees ($2\pi/3$) with respect to the second rotor blade 101b with respect to pitching. Thus, all three rotor blades 101a, 101b and 101c are continuously or step-wise pitched.

It is noted here that, according to an exemplary embodiment, each individual rotor blade 101a, 101 c is at zero pitch offset when the rotor blade is in a horizontal position (0 degrees and 180 degrees, respectively). The continuous pitching method according to this typical embodiment ensures that a high energy conversion efficiency from wind energy into rotational energy is obtained.

The diagram shown in Fig. 4 is given for a situation where during the pitching shown in Fig. 4 a constant rotational velocity is maintained.

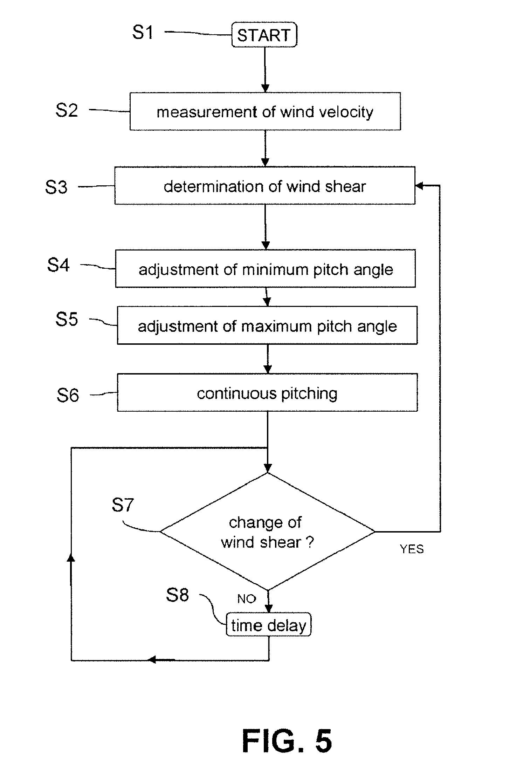

Fig. 5 is a flowchart of a method according to another typical embodiment. At a step S1, the procedure is started. Then the wind velocity is measured at the location of the wind turbine, e.g. by using the anemometer unit 111 (see Fig. 1). Then the wind shear is determined from individual anemometers or wind shear sensors (step S3). According to the measured wind shear distribution (wind shear envelope) 209, a minimum pitch angle is adjusted (step S4) and a maximum pitch angle is adjusted (step S5). Besides the range in which the pitch angle is varying, also the phase angle between the point of maximum and minimum pitch angle and the rotational position is established, as well as the optimum pitching cycle, which does not need to be sinusoidal. Continuous pitching is then performed between the minimum pitch angle and the maximum pitch angle at step S6.

At step S7, it is determined whether the wind shear distribution 209 has changed or not. If the wind shear distribution 209 has changed (YES at step S7), then the procedure returns to step S3 where a new wind shear is determined, and steps S4, S5, S6 and S7 are performed. When the wind shear did not change (NO at step S7), the procedure is subjected to a time delay at step S8 and then returns to step 7.

The determination of the wind shear which is performed at step S3 can be based on different wind velocity sensors or anemometer units arranged at different heights. In addition to that, anemometer units may be provided at locations within the rotor plane, e.g. at one or more individual rotor blades. Furthermore, the wind shear may be determined by a numerical model.

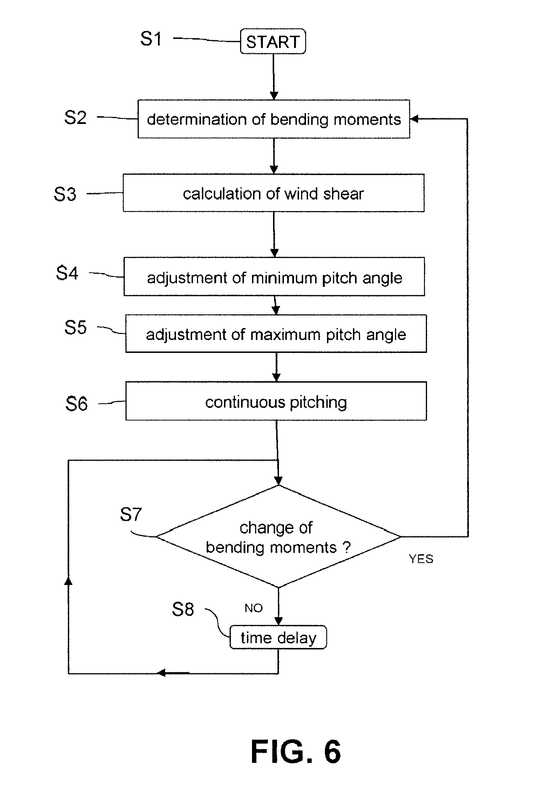

Fig. 6 is a flowchart of a method for adjusting a pitch angle of at least one rotor blade of a wind turbine 100 according to yet another typical embodiment.

At step S1, the procedure is started. Bending moments 109 of the wind turbine 100 (see Fig. 1) are determined by at least one bending moment detector 115. Furthermore, it is possible to change the pitch angle between the first pitch angle and at least two second pitch angles while the rotor is rotating by using the at least one pitch angle adjustment unit.

The bending moment detector 115 may be adapted to detect a bending moment of at least one of an individual rotor blade 101a, 101b, 101 c, a main shaft axis 112, the machine nacelle 103 and the tower 102.

Furthermore, the at least pitch angle adjustment unit 114 is adapted for adjusting the pitch angle 108 of the at least one rotor blade 101 continuously or step-wise between the first pitch angle and the second pitch angle during one half rotation of the rotor. The first pitch angle may be a minimum pitch angle corresponding to a minimum wind velocity of the wind shear distribution 209, whereas the second pitch angle may be a maximum pitch angle corresponding to a maximum wind velocity of the wind shear distribution 209. The adjustment of the pitch angle by means of the pitch angle adjustment unit 114 may be performed cyclically in synchronisation with the rotational speed of the rotor.

Then, at steps S4 and S5, a minimum pitch angle S4 and a maximum pitch angle S5, respectively, are adjusted. Then, at step S6, a continuous pitching is performed. After step S6, the procedure proceeds to step S7, where it is determined whether the wind shear distribution 209 has changed or not. If the wind shear distribution 209 has changed ("YES" at step S7), the procedure returns to step S3, wherein steps S3 to S7 are repeated. If it is determined that the wind shear did not change ("NO" at step S7), the procedure is subjected to a time delay at step S8 and then returns to step 7.

The invention has been described on the basis of embodiments which are shown in the appended drawings and from which further advantages and modifications emerge. However, the invention is not restricted to the embodiments described in concrete terms, but rather can be modified and varied in a suitable manner. It lies within the scope of the invention to combine individual features and combinations of features of one embodiment with features and combinations of features of another embodiment in a suitable manner in order to arrive at further embodiments.

It will be apparent to those skilled in the art, based upon the teachings herein, that changes and modifications may be made without departing from the invention disclosed and its broader aspects. That is, all examples set forth herein above are intended to be exemplary and non-limiting.

Various aspects and embodiments of the present invention are defined by the following numbered clauses:

1. A wind turbine (100) comprising a machine nacelle (103) and a rotor having at least one rotor blade (101) and a hub (104), said wind turbine (100) further comprising:

an anemometer unit (111) adapted for measuring a first wind velocity at a first rotational position of the rotor and for measuring at least one second wind velocity at at least one second rotational position of the rotor;

at least one pitch angle adjustment unit (114) adapted for adjusting a first pitch angle (108) of the at least one rotor blade(101) as a function of the rotational position of the rotor wherein the first pitch angle (108) corresponds to the first wind velocity and for adjusting at least one second pitch angle (108) of the at least one rotor blade (101) as a function of the rotational position of the rotor wherein the at least one second pitch angle (108) corresponds to the at least one second wind velocity, wherein

the at least one pitch angle adjustment (114) unit is adapted for changing the pitch angle (108) between the first pitch angle (108) and the at least one second pitch angle (108) while the rotor of the wind turbine (100) is rotating.

2. The wind turbine (100) in accordance with clause 1, wherein a wind shear determination unit is provided which is adapted for determining a wind shear distribution (209) at the location of the wind turbine (100).

3. The wind turbine (100) in accordance with any preceding clause, wherein the at least one pitch angle adjustment unit (114) is adapted for adjusting the first pitch angle (108) to a minimum pitch angle (108) corresponding to a minimum wind velocity of the wind shear distribution (209).

4. The wind turbine (100) in accordance with any preceding clause, wherein the at least one pitch angle adjustment unit (114) is adapted for adjusting the at least one second pitch angle (108) to a maximum pitch angle (108) corresponding to a maximum wind velocity of the wind shear distribution (209).

5. The wind turbine (100) in accordance with any preceding clause, wherein the at least one pitch angle adjustment unit (114) is adapted for adjusting the pitch angle (108) of the at least one rotor blade (101) continuously or step-wise between the first pitch angle (108) and the second pitch angle (108) during one half rotation of the rotor.

6. The wind turbine (100) in accordance with any preceding clause, wherein the wind shear determination unit is adapted for determining a vertical wind shear distribution v(h) at the location of the wind turbine (100) according to the relation

$$v(h) = v_{ref} \cdot \left( \frac{h}{h_{ref}} \right)^{\alpha},$$ wherein h is a height above ground, $v_{ref}$ is a reference velocity at a reference height $h_{ref}$ and $\alpha$ is a predeterminable parameter.

7. The wind turbine (100) in accordance with any preceding clause, wherein the predeterminable parameter $\alpha$ ranges from 0.10 to 0.20, and typically has a value of 0.16.

8. The wind turbine (100) in accordance with any preceding clause, wherein at least one bending moment detector (115) is provided which is adapted for detecting at least one bending moment (109) applied at the rotor, wherein
the wind shear determination unit is adapted for determining a wind shear distribution (209) at the location of the wind turbine (100) from the detected bending moment (109).

9. The wind turbine (100) in accordance with any preceding clause, wherein the at least one bending moment detector (115) is adapted for detecting a bending moment (109) of at least one of a rotor blade (101), the main shaft, the machine nacelle, and the tower.

10. A method for adjusting a pitch angle (108) of at least one rotor blade (101) of a wind turbine (100) comprising a machine nacelle and a rotor having at least one rotor blade (101) and a hub, said method further comprising:

measuring a first wind velocity at a first rotational position of the rotor;

measuring at least one second wind velocity at at least one second rotational position of the rotor;

adjusting a first pitch angle (108) of the at least one rotor blade (101) as a function of the rotational position of the rotor wherein the first pitch angle (108) corresponds to the first wind velocity;

adjusting at least one second pitch angle (108) of the at least one rotor blade (101) as a function of the rotational position of the rotor wherein the at least one second pitch angle (108) corresponds to the at least one second wind velocity; and

changing the pitch angle (108) between the first pitch angle (108) and the at least one second pitch angle (108) while the rotor of the wind turbine (100) is rotating.

11. The method in accordance with clause 10, wherein a wind shear distribution (209) at the location of the wind turbine (100) is measured.

12. The method in accordance with clause 10 or 11, wherein the first pitch angle (108) is a minimum pitch angle (108) angle and corresponds to a minimum wind velocity of the wind shear distribution and a position at which the minimum wind velocity is measured.

13. The method in accordance with any of clauses 10 to 12, wherein the second pitch angle (108) is a maximum pitch angle (108) angle and corresponds to a maximum wind velocity of the wind shear distribution and a position at which the maximum wind velocity is measured.

14. The method in accordance with any of clauses 10 to 13, wherein the pitch angle (108) of the at least one rotor blade (101) is adjusted continuously or step-wise between the first pitch angle (108) and the second pitch angle (108) during one half rotation of the rotor.

15. The method in accordance with any of clauses 10 to 14, wherein a vertical wind shear distribution (209) is determined from a measured reference wind velocity at the location of the wind turbine (100) and according to the relation $v(h) = v_{ref} \cdot \left( \dfrac{h}{h_{ref}} \right)^{\alpha}$ , wherein h is a height above ground, $v_{ref}$ is a reference velocity at a reference height $h_{ref}$ and $\alpha$ is a predeterminable parameter.

16. The method in accordance with any of clauses 10 to 15, wherein the predeterminable parameter $\alpha$ ranges from 0.10 to 0.20, and typically has a value of 0.16.

17. The method in accordance with any of clauses 10 to 16, wherein the adjustment of the pitch angle (108) of the at least one rotor blade (101) is performed cyclically in synchronization with the rotational speed of the rotor.

18. The method in accordance with ay of clauses 10 to 17, wherein a bending moment (109) of the rotor of the wind turbine (100) is measured and wherein a wind shear distribution (209) at the location of the wind turbine (100) is determined from the measured bending moment (109).

19. The method in accordance with any of clauses 10 to 18, wherein the first pitch angle (108) is a minimum pitch angle (108) corresponding to a minimum wind velocity of the wind shear distribution (209).

20. The method in accordance with any of clauses 10 to 19, wherein the second pitch angle (108) is a maximum pitch angle (108) corresponding to a maximum wind velocity of the wind shear distribution (209).

**Claims**

1. A method for adjusting a pitch angle of at least one rotor blade of a wind turbine (100) comprising a machine nacelle (103) and a rotor having at least one rotor blade (101) and a hub (104), said method further comprising:

measuring a first wind velocity (201) at a first rotational position of the rotor;
measuring at least one second wind velocity (202) at at least one second rotational position of the rotor;
adjusting a first pitch angle (108) of the at least one rotor blade (101) as a function of the rotational position of the rotor wherein the first pitch angle (108) corresponds to the first wind velocity;

adjusting at least one second pitch angle of the at least one rotor blade (101) as a function of the rotational position of the rotor wherein the at least one second pitch angle corresponds to the at least one second wind velocity (202); and

changing the pitch angle between the first pitch angle and the at least one second pitch angle while the rotor of the wind turbine (100) is rotating.

2. The method in accordance with claim 1, wherein a wind shear distribution (209) at the location of the wind turbine is measured.

3. The method in accordance with any preceding claim, wherein the first pitch angle is a minimum pitch angle and corresponds to a minimum wind velocity of the wind shear distribution (209) and a position at which the minimum wind velocity is measured.

4. The method in accordance with any preceding claim, wherein the second pitch angle is a maximum pitch angle and corresponds to a maximum wind velocity (202) of the wind shear distribution (209) and a position at which the maximum wind velocity is measured.

5. The method in accordance with any preceding claim, wherein the pitch angle (108) of the at least one rotor blade (101) is adjusted continuously or step-wise between the first pitch angle and the second pitch angle during one half rotation of the rotor.

6. The method in accordance with any preceding claim, wherein a vertical wind shear distribution (v(h)) is determined from a measured reference wind velocity at the location of the wind turbine and according to

the relation $v(h) = v_{ref} \cdot \left( \dfrac{h}{h_{ref}} \right)^{\alpha}$ , wherein h is a height above ground, $v_{ref}$ is a reference velocity at a reference height $h_{ref}$ and $\alpha$ is a predeterminable parameter.

7. The method in accordance with claim 6, wherein the predeterminable parameter $\alpha$ ranges from 0.10 to 0.20, and typically has a value of 0.16.

8. The method in accordance with any preceding claim, wherein the adjustment of the pitch angle (108) of the at least one rotor blade (101) is performed cyclically in synchronization with the rotational speed of the rotor.

9. A wind turbine (100) comprising a machine nacelle (103) and a rotor having at least one rotor blade (101) and a hub (104), said wind turbine further comprising:

an anemometer unit (111) adapted for measuring a first wind velocity (201) at a first rotational position of the rotor and for measuring at least one second wind velocity (202) at at least one second rotational position of the rotor; and
at least one pitch angle adjustment unit (114) adapted to perform a method according to any of the preceding claims.

10. The wind turbine in accordance with claim 9, wherein a wind shear determination unit (113) is provided which is adapted for determining a wind shear distribution (209) at the location of the wind turbine.

**FIG. 1**

**FIG. 2**

**FIG. 3**

FIG. 4

FIG. 5

S1 —— START

S2 —— determination of bending moments

S3 —— calculation of wind shear

S4 —— adjustment of minimum pitch angle

S5 —— adjustment of maximum pitch angle

S6 —— continuous pitching

S7 — change of bending moments ?

YES

S8 — NO

time delay

# FIG. 6